# EUROPÄISCHE PATENTSCHRIFT

(11) **EP 1 905 013 B1**
(45) Veröffentlichungstag und Bekanntmachung des Hinweises auf die Patenterteilung: **25.11.2009**
(21) Anmeldenummer: 06762575.6
(22) Anmeldetag: 13.07.2006
(51) Int. Cl.: G11B 5/024, H01F 13/00

(54) **ENTMAGNETISIERUNGSVORRICHTUNG**
DEGAUSSING DEVICE
DISPOSITIF DE DEMAGNETISATION

(30) Priorität: 14.07.2005 DE 102005032940
(43) Veröffentlichungstag der Anmeldung: 02.04.2008
(73) Patentinhaber: Metzlaff, Marc, 82166 Gräfelfing (DE)
(72) Erfinder: Metzlaff, Marc, 82166 Gräfelfing (DE)
(74) Vertreter: HOFFMANN EITLE
(86) Internationale Anmeldenummer: PCT/EP2006/006884
(87) Internationale Veröffentlichungsnummer: WO 2007/006582

(56) Entgegenhaltungen:
- US-A- 4 617 603
- PATENT ABSTRACTS OF JAPAN Bd. 013, Nr. 452 (P-943), 12. Oktober 1989 (1989-10-12) -& JP 01 173401 A (SUMITOMO METAL MINING CO LTD), 10. Juli 1989 (1989-07-10)

## Beschreibung

Die Erfindung betrifft eine Entmagnetisierungsvorrichtung für magnetische Datenträger, mit einem mit Wechselstrom betriebenen, mit wenigstens einer Erregerwicklung versehenen Elektromagneten, durch dessen beiderseits der/des zu entmagnetisierenden Datenträger(s) angeordnetes Joch der/die Datenträger mittels einer Transporteinrichtung bewegt werden, wobei die wenigstens eine Erregerwicklung des Elektromagneten mit wenigstens einem Kondensator zu einem Resonanzkreis verschaltet ist.

Eine Entmagnetisierungsvorrichtung für eine professionelle Datenvernichtung muss eine ausreichend große Menge an Datenträgermaterial vollständig löschen können. Ein solches Löschen von mit Magnetfeldern beschriebenen Datenträgern erfolgt in der Regel ebenfalls über Magnetfelder. Zum Löschen von Datenträgern ist ein magnetisches Gleichfeld ungeeignet. Zur Erzeugung eines magnetischen Wechselfeldes in einem für große Fördermengen ausreichenden Volumen mit einer Wechselfeldstärke von bis zu 1 Tesla oder stärker, die zum sicheren Löschen der Daten mit einer Ummagnetisierungszahl von > 20 nötig scheint, muss eine Leistung > 400 kW im Magnetfeld umgesetzt werden.

Generell sind Entmagnetisierungsvorrichtungen für Datenträger bekannt. So zeigt bereits die deutsche Auslegeschrift 1 230 463 einen Blocklöscher zum Löschen magnetischer Aufzeichnungen auf zu Rollen gewickelten Magnetbändern mit einer Anzahl auf Eisenkerne gewickelter Spulen, welche durch gegeneinander phasenverschobene Wechselströme gespeist sind und gemeinsam das Löschfeld erzeugen. Hier werden einzelne Magnetbandspulen mit einer Geschwindigkeit von ca. 8 cm/s über den Blocklöscher geführt, wobei die Spulen einen Durchmesser von 30 cm aufweisen können. Zum Löschen werden hier relativ geringe Leistungen und Magnetfelder eingesetzt. Erwähnt ist ein Phasenstrom von 3 A bei 220 V Netzspannung. Durch die Anordnung von 6 Spulen, die paarweise zusammengeschaltet sind, wobei wenigstens ein Spulenpaar benachbarte Spulen und wenigstens ein anderes nicht benachbarte Spulen umfasst, und die Ansteuerung über ein dreiphasiges Drehstromnetz wird ein auf jeden Punkt der Magnetbandspule einwirkendes Löschfeld erzeugt, dass sich ständig in Richtung, Größe und Sinn ändert.

Die deutsche Offenlegungsschrift 27 22 167 offenbart eine Bandlöschspule, mittels welcher elektromagnetische Aufzeichnungen auf vollständigen Bandspulen gelöscht werden können. Diese Bandlöschspule umfasst einen E-förmigen Elektromagneten, der aus Silizium-Eisen-Lamellen aufgebaut ist und eine Erregerspule an einem äußeren Schenkel aufweist.

Die DE 37 36 024 C1 offenbart eine Entmagnetisierungsvorrichtung, die vorzugsweise für die Löschung von bandförmigen aufgespulten magnetischen Aufzeichnungsträgern vorgesehen ist, die aus Spulen mit einem lamellierten Eisenkern besteht, wobei der Aufzeichnungsträger zwischen zwei übereinanderliegenden E-förmigen Jochen hindurchgeführt wird. Es ist beschrieben, dass die Spulen mit lamellierten Eisenkernen mit Kondensatoren zu einem Schwingkreis zusammengeschaltet werden, der auf die Resonanzfrequenz des zur Versorgung der Spulen dienenden technischen Wechselstroms abgestimmt ist. Weiter ist beschrieben, dass die Entmagnetisierungsvorrichtung auch für die Entmagnetisierung von Magnetplatten oder -karten geeignet ist.

Weiter zeigt die DE 197 36 383 A1 eine Vorrichtung zur Entmagnetisierung eines in einer Gehäuseeinheit befindlichen magnetischen Datenträgers, bei der die Entmagnetisierungsspule um einen Luftraum gewickelt ist, eine Einführvorrichtung zur Aufnahme der Geräteeinheit und Einführung der Geräteeinheit in den Luftraum vorgesehen ist und ein Kondensator mit der Entmagnetisierungsspule zu einem Resonanzkreis verbunden ist. Hier sind Kondensator und Entmagnetisierungsspule so dimensioniert, dass die Resonanzfrequenz des Resonanzkreises bei in den Luftraum eingeführter Geräteeinheit etwa der Frequenz des Wechselstroms entspricht, mit dem die Entmagnetisierungsspule erregt wird. Es ist beschrieben, dass die Intensität des durch die Entmagnetisierungsspule fließenden Wechselstroms steuerbar sein kann.

Allen diesen Entmagnetisierungsvorrichtungen ist gemeinsam, dass sie jeweils einen magnetischen Datenträger gleichzeitig und somit relativ geringe Mengen magnetischer Datenträger auf einmal löschen können, oder dass relativ geringe Magnetfelder zum Löschen verwendet werden, wodurch heute verwendete Datenträger wie Festplatten nicht mehr sicher gelöscht werden. Diese das Prinzip der Löschung von Datenträgern aufzeigenden Lösungen sind aus diesen Gründen für die heute erforderliche professionelle Datenvernichtung nicht geeignet.

Schließlich zeigt die EP 0 447 654 A1 eine Entmagnetisierungseinrichtung für magnetische Aufzeichnungsträger, hier bandförmig aufgewickelte magnetische Aufzeichnungsträger, sogenannte Pancakes, bestehend aus einer zylindrischen Spule, deren Feldverlauf im Wesentlichen parallel zur Wickelebene des Aufzeichnungsträgers verläuft. Die Pancakes sind über eine Hubvorrichtung in axialer Richtung in die Spule einführbar und durch die kompakte Form kann ein ganzer Pancake-Stapel auf einmal entmagnetisiert werden. Obwohl die magnetische Feldstärke nicht beschrieben wird, ist davon auszugehen, dass diese am Anfang der Entmagnetisierung ebenfalls in der Größenordnung von 1 Tesla liegt, da eine Kondensatorbatterie mit einer Kapazität von 3 mF mit einer Ladespannung von 3 kV aufgeladen und über einen mit der Entmagnetisierungsspule gebildeten Schwingkreis mit einer Eigenfrequenz von 50 Hz entladen wird. Die zylindrische Löschspule hat einen Außendurchmesser von 950 mm, einen Innendurchmesser von 600 mm sowie eine Höhe von 500.mm und die Masse der Kupferwicklungen beträgt 700 kg: Die Abklingzeit beträgt einige Sekunden und nach 5 Sekunden wird der Pancake-Stapel wieder aus der Einrichtung herausgehoben, wodurch die Bänder vollständig und gleichmäßig gelöscht werden.

Obwohl mit dieser Entmagnetisierungseinrichtung bereits ganze Pancake-Stapel auf einmal entmagnetisiert werden können, ist diese für eine professionelle Datenvernichtung, bei der Datenträger kontinuierlich durch ein Wechselmagnetfeld geführt werden sollen, nicht geeignet, da der Pancake-Stapel während des Abklingens des Magnetfelds durch die Entladung der Kondensatorsbatterie über den Schwingkreis in der Entmagnetisierungseinrichtung verbleiben muss, wonach für einen nächsten Stapel die Kondensatorsbatterie wieder aufgeladen und nach Einführen des nächsten Stapels über den Schwingkreis entladen werden muss. Auf diese Weise entsteht ein diskontinuierlicher Prozess. Ein kontinuierliches Durchfahren von mehreren Pancakes durch die Entmagnetisierungseinrichtung ist nicht möglich.

Die JP 01-173401 A (vergl.den Obberbegriff von Anspruch 1) offenbart eine Entmagnetisierungsvorrichtung für magnetische Datenträger, die einen Elektromagneten mit einem Spalt aufweist, durch welchen ein magnetischer Datenträger von einem Transportband in rechtem Winkel zum erzeugten Magnetfeld durchgeführt wird. Der Elektromagnet bildet als Induktivität mit einem Kondensator einen Resonanzkreis.

Die US 4,617,603 A offenbart ein Entmagnetisierungssystem zur Entmagnetisierung von zuvor magnetisierten Materialien in großen Mengen. Das System umfasst einen Elektromagneten mit Feldspulen, die um einen Kern gewickelt sind. Die Feldspulen bilden mit Kondensatoren jeweils einen Resonanzkreis. Dieser Resonanzkreis wird eingangsseitig von einem Wechselrichter gespeist, der die zugeführte Gleichspannung in eine hochfrequente Rechteckspannung umgewandelt.

Es ist daher Aufgabe der vorliegenden Erfindung, eine Entmagnetisierungsvorrichtung für magnetische Datenträger anzugeben, die derart für eine professionelle Datenvernichtung geeignet ist, dass die zu entmagnetisierenden Datenträger in großer Menge kontinuierlich durch die Entmagnetisierungsvorrichtung geführt werden können, wobei ein sicheres Löschen der auf den magnetischen Datenträgern vorhandenen Information möglich ist.

Erfindungsgemäß wird diese Aufgabe gelöst durch eine Entmagnetisierungsvorrichtung für magnetische Datenträger, mit einem mit Wechselstrom betriebenen, mit wenigstens einer Erregerwicklung versehenen Elektromagneten, durch dessen beiderseits der/des zu entmagnetisierenden Datenträger(s) angeordnetes Joch der/die Datenträger mittels einer Transporteinrichtung bewegt werden, wobei die wenigstens eine Erregerwicklung des Elektromagneten mit wenigstens einem Kondensator zu einem Resonanzkreis verschaltet ist, bei der der Resonanzkreis über einen Wechselrichter gespeist wird und eine Ausgangsspannung des Wechselrichters auf die Resonanzfrequenz des Resonanzkreises synchronisiert ist, wobei die erfindungsgemäße Entmagnetisierungsvorrichtung vorzugsweise eine Strommesseinrichtung, die die Amplituden des in den Resonanzkreis fließenden Stroms misst, und eine Frequenzeinstelleinrichtung aufweist, die eine Frequenz einer vom Wechselrichter erzeugten Speisespannung, ausgehend von einer oberhalb der Resonanzfrequenz liegenden Frequenz solange vermindert, bis die von der Strommesseinrichtung gemessene Stromamplitude auf einen vorbestimmten Wert eingestellt ist.

Diese erfindungsgemäße Anordnung hat gegenüber dem beschriebenen Stand der Technik insbesondere die beiden Vorteile, dass a) eine kontinuierliche Entmagnetisierung magnetischer Datenträger im Dauerbetrieb möglich ist, da die Resonanz im Resonanzkreis aufrechterhalten wird, indem die Verluste des Resonanzkreises über den Wechselrichter ausgeglichen werden und b) eine Resonanzfrequenz des Resonanzkreises trotz Speisung der Verluste optimal für die Entmagnetisierung gewählt werden kann, da der Wechselrichter eingestellt werden kann, eine Speisespannung mit einer solchen Frequenz auszugeben, dass der Resonanzkreis in Resonanz gehalten wird. Durch eine solche Anordnung kann in technisch relativ einfacher Weise ein Magnetfeld von 1 Tesla oder mehr erzeugt werden, das im Dauerbetrieb zur Verfügung steht. Weiter werden durch die Verwendung des Wechselrichters sowohl Fertigungstoleranzen der Erregerwicklungen und der Kondensatoren als auch Veränderungen der Resonanzfrequenz aufgrund einer Alterung oder Erwärmung dieser Bauelemente ausgeglichen und durch die erfindungsgemäße Synchronisation des Wechselrichters, d.h. der Frequenz der von diesem erzeugten Speisespannung auf die Resonanzfrequenz, wird in besonders einfacher Weise sichergestellt, dass der Resonanzkreis derart angeregt bzw. in Resonanz gehalten wird, dass die von dem Elektromagneten erzeugte Wechselfeldstärke einen bestimmten Wert erreicht, z.B. 1 Tesla, da dieser von der Stromamplitude des im Resonanzkreis fließenden Stroms abhängig ist.

Die Unteransprüche beinhalten vorteilhafte Weiterbildungen und Ausgestaltungen des Gegenstands des unabhängigen Anspruchs 1.

Vorzugweise umfasst die erfindungsgemäße Entmagnetisierungsvorrichtung einen Transformator, der zwischen den Wechselrichter und den Resonanzkreis geschaltet ist. Durch einen solchen Transformator kann zum einen in besonders einfacher Weise eine Anpassung der Amplitude der vom Wechselrichter ausgegebenen Speisespannung an eine für die Entmagnetisierung vorteilhafte Spannungsamplitude gewährleistet werden, zum anderen ist hierdurch eine galvanische Trennung zwischen dem Resonanzkreis, in dem hohe Spannungen und Ströme fließen, und einer Energieversorgung, von der der Wechselrichter gespeist wird, verwirklicht.

Die Entmagnetisierungsvorrichtung nach der Erfindung umfasst vorzugsweise eine Spannungsüberwachungseinrichtung, die Amplituden der im Resonanzkreis erzeugten Spannung misst und Amplituden der vom Wechselrichter erzeugten Speisespannung so begrenzt, dass eine Zerstörung der durch diese Speisespannung versorgten Bauelemente verhindert wird.

Die erfindungsgemäße Entmagnetisierungsvorrichtung umfasst vorzugsweise einen Gleichrichter zur Versorgung des Wechselrichters mit Gleichstrom. Dieser Gleichrichter besteht weiter vorzugsweise aus einer Diodenbrücke mit vorgeschalteten Drosselspulen. Durch diese vorzugsweisen Ausführungsformen kann die erfindungsgemäße Entmagnetisierungsvorrichtung ohne Umrüstung von einem Drehstromnetz oder einem drehstromerzeugenden Generator betrieben werden. Durch die der Diodenbrücke, die im Falle eines dreiphasigen Drehstromnetzes bzw. -generators aus sechs Dioden besteht, vorgeschalteten Drosselspulen (eine für jede Phase) werden Netzrückwirkungen bzw. Rückwirkungen auf den Generator weitestgehend unterdrückt. Zur vollständigen Unterdrückung solcher Rückwirkungen kann auch ein aktiver Gleichrichter vorgesehen werden.

Bei der erfindungsgemäßen Entmagnetisierungsvorrichtung ist das Joch vorzugsweise 8-förmig, wobei der/die Datenträger durch einen Zwischenraum geführt werden, der durch einen geöffneten Mittelsteg des 8-förmigen Jochs gebildet wird. In diesem Fall beträgt das Volumen des Zwischenraums vorzugsweise 200 mm x 200 mm x 70 mm. Noch weiter vorzugsweise oder alternativ dazu weist der Elektromagnet der erfindungsgemäßen Entmagnetisierungsvorrichtung vorteilhafterweise vier Erregerwicklungen auf, von denen jeweils zwei auf einer Hälfte des 8-förmigen Jochs angeordnet sind. Durch die 8-förmige Ausführung des Jochs wird insbesondere bei einer Anordnung mit vier Erregerwicklungen, in dem durch den geöffneten Mittelsteg des 8-förmigen Jochs gebildeten Zwischenraum bei Erregung der Erregerwicklungen ein sehr starkes-Magnetfeld gebildet.

Das Joch der erfindungsgemäßen Entmagnetisierungsvorrichtung kann auch eine andere Form aufweisen, insbesondere kann es 0förmig sein, wobei in diesem Fall eine oder mehrere, insbesondere auch vier, Erregerwicklungen auf dem Joch angeordnet sein können. Das Volumen des Zwischenraums in dem 8-förmigen oder einem andersförmigen, z.B. 0-förmigen, Joch kann auch andere Abmessungen haben, es sollte insbesondere im Wesentlichen eine- Quaderform aufweisen, wobei diese Form auch anderes gewählt werden kann, solange es gewährleistet ist, dass ein Durchfluss großer Mengen möglich ist und der/die zu entmagnetisierenden Datenträger leicht vollständig durch das Entmagnetisierungsvolumen geführt werden können, wobei hiervon auch vollständige oder teil-demontierte Festplattenlaufwerke umfasst sind. Der Zwischenraum der erfindungsgemäßen Entmagnetisierungseinrichtung ist demzufolge ein von dem starken Magnetfeld der erfindungsgemäßen Entmagnetisierungsvorrichtung durchfluteter relativ großer Raum.

Das Joch des Elektromagneten der erfindungsgemäßen Entmagnetisierungsvorrichtung besteht vorzugsweise aus Elektroblech. In diesem Fall werden die vom Magnetfeld in das Joch induzierten Wirbelströme und die damit verbundenen Verluste reduziert.

Die Erregerwicklungen des Elektromagneten der erfindungsgemäßen Entmagnetisierungsvorrichtung bestehen vorzugsweise aus gepresster, verseilter Kupferlitze. Durch die Verwendung von verseilter Kupferlitze sind die vom Magnetfeld in die Erregerwicklungen induzierten Wirbelströme und die damit verbundenen Verluste reduziert. Die Ausführung der Kupferlitzen als Presslitzen bewirkt einen möglichst hohen Kupferfüllfaktor und damit möglichst geringe ohmsche Verluste im Leiter.

Die Erregerwicklungen des Elektromagneten der erfindungsgemäßen Entmagnetisierungsvorrichtung werden vorzugsweise mittels einer Flüssigkeitskühlung gekühlt. Hier werden weiter bevorzugt die gesamten Verluste des Elektromagneten mittels einer in die Erregerwicklungen integrierten Wasser/Glykol-Kühlung abgeführt.

Der/die Datenträger können vor der Entmagnetisierung durch Bewegen durch das Joch des Elektromagneten mittels der erfindungsgemäßen Entmagnetisierungsvorrichtung vorzugsweise geschreddert werden. Hierzu weist die erfindungsgemäße Entmagnetisierungsvorrichtung vorzugsweise eine Zuführung für die geschredderten Datenträger und/oder einen Schredder auf. Die erfindungsgemäße Entmagnetisierungsvorrichtung entmagnetisiert jedoch besonders bevorzugt, wie oben angegeben, vollständige Datenträger, die nach ihrer Entmagnetisierung zur Wiederverwendung zur Verfügung stehen oder geschreddert werden könnten, in welchem Fall die erfindungsgemäße Entmagnetisierungsvorrichtung vorzugsweise eine Zuführung für die vollständigen Datenträger und/oder einen der erfindungsgemäßen Entmagnetisierungsvorrichtung nachgeordneten Schredder aufweist.

Die erfindungsgemäße Entmagnetisierungsvorrichtung weist vorzugsweise ein durch das Joch des Elektromagneten führendes Förderband zur Zu- und Abfuhr der/des Datenträger(s) auf. Dieses kann auch durch eine Rutsche ersetzt sein, wobei die Rutsche und/oder das Joch der erfindungsgemäßen Entmagnetisierungsvorrichtung vorzugsweise kippbar gelagert sind, wodurch in besonders einfacher Weise eine Bestimmung der Geschwindigkeit der/des zu entmagnetisierenden Datenträger(s) erfolgen kann, insbesondere, wenn geschreddertes Material entmagnetisiert wird.

Die erfindungsgemäße Entmagnetisierungsvorrichtung kann anstelle des Förderbands oder der Rutsche auch eine Schnecke zur Förderung der/des Datenträger(s) durch das Joch des Elektromagneten aufweisen. Diese Schnecke besteht weiter vorzugsweise, wie auch das Förderband und/oder die Rutsche, aus einem nicht-magnetischen Material, zumindest im Bereich des Entmagnetisierungsvolumens, d.h. des Zwischenraums, und/oder ist so ausgestaltet, dass Datenträger oder Teile davon (ob geschreddert oder nicht) nicht im Bereich des von dem Elektromagneten erzeugten Magnetfelds stecken bleiben oder verkeilen können.

Die erfindungsgemäße Entmagnetisierungsvorrichtung ist vorzugsweise auf einem LKW angeordnet, also für einen mobilen Einsatz konzipiert. In diesem Fall werden Datenträger mit zu verdichtenden Daten vorzugsweise mittels der erfindungsgemäßen Entmagnetisierungsvorrichtung gelöscht und anschließend mittels eines ebenfalls auf dem LKW angeordneten Schredders zerkleinert, bevor sie entsorgt werden. Auf diese Weise ist erfindungsgemäß vorzugsweise eine professionelle Datenvernichtung auch größerer Mengen von Datenträgern durch sowohl magnetisches Löschen als auch Zerkleinern der Datenträger möglich. Es können magnetooptische und magnetische Datenträger, z.B. Festplatten, Videobänder, Datenbänder, magnetooptische Platten und ähnliches, sicher vernichtet werden, indem Datenträger im Durchlaufverfahren einem hohen magnetischen Wechselfeld unterzogen werden und dadurch eine vollständige Entmagnetisierung des Materials und damit Löschung der Daten erreicht wird. Das entmagnetisierte Material wird anschließend vorzugsweise zerkleinert und in Abfallbehältern gesammelt und kann regulär entsorgt werden. Mit der erfindungsgemäßen Entmagnetisierungsvorrichtung können jedoch auch schon geschredderte Datenträger sicher entmagnetisiert werden.

Bei der erfindungsgemäßen Entmagnetisierungsvorrichtung ist eine Ansteuer- bzw. Überwachungselektronik für den Wechselrichter, insbesondere die Strommesseinrichtung und/oder die Frequenzeinstelleinrichtung und/oder die Spannungsüberwachungseinrichtung, über ein von einer dem Wechselrichter zugeführten Gleichspannung unabhängiges Versorgungsnetz gespeist. Im Falle der Anordnung der erfindungsgemäße Entmagnetisierungsvorrichtung auf einem LKW ist dieses unabhängige Versorgungsnetz vorzugsweise das Bordspannungsnetz des LKW's. Sowohl im Falle der Anordnung der erfindungsgemäßen Entmagnetisierungsvorrichtung auf einem LKW als auch im Falle einer stationären Anordnung kann eine Versorgung der Entmagnetisierungsvorrichtung unabhängig von auf dem LKW vorhandenen Stromquellen, d.h. z.B. einem Generator für die Speisung der Entmagnetisierungsspulen und dem Bordnetz zur Versorgung der Ansteuer- bzw. Überwachungselektronik, über ein Festnetz erfolgen, z.B. über einen dreiphasigen Starkstromanschluss zur Versorgung der Entmagnetisierungsspulen und einem 230 V Festnetzanschluss.

Weitere Einzelheiten, Vorteile und Merkmale der vorliegenden Erfindung ergeben sich aus nachfolgender Beschreibung von Ausführungsbeispielen anhand der beigefügten Zeichnung. Es zeigen:
- Fig. 1: einen Elektromagneten der erfindungsgemäßen Entmagnetisierungsvorrichtung nach einer bevorzugten Ausführungsform; und
- Fig. 2: ein elektrisches Schaltbild der erfindungsgemäßen Entmagnetisierungsvorrichtung nach der bevorzugten Ausführungsform.

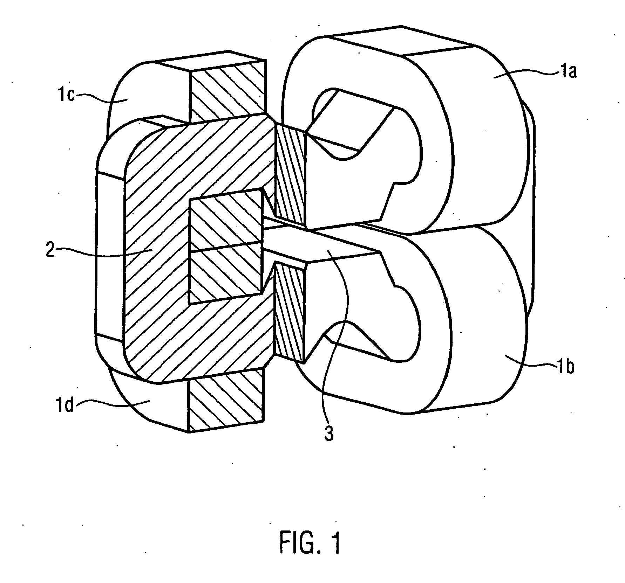

Die Fig. 1 zeigt eine bevorzugte Ausführungsform des Elektromagneten der erfindungsgemäßen Entmagnetisierungsvorrichtung in einer perspektivischen und teilweise aufgeschnittenen Darstellung. Der Elektromagnet weist vier Erregerspulen 1a-1d auf, von denen jeweils zwei in den "Ösen" eines 8-förmigen Jochs 2 angeordnet sind, das einen geöffneten Mittelsteg aufweist. Diese Öffnung bildet einen Zwischenraum 3 mit einem Volumen von 200 mm x 200 mm x 70 mm, durch das die zu entmagnetisierenden intakten oder geschredderte Datenträger geführt werden. Diese Führung erfolgt vorzugsweise durch ein (nicht gezeigtes) Förderband 4, auf dem das zu entmagnetisierende Datenträgermaterial durch das Entmagnetisierungsvolumen geführt wird, das vorzugsweise noch nicht geschreddert ist und nach der Entmagnetisierung geschreddert wird. Das 8-förmige Joch 2 führt das von den Erregerwicklungen 1a-1d erzeugte Magnetfeld, um den einen 70 mm breiten Spalt bildenden Zwischenraum 3, so dass dieser von dem Magnetfeld durchflutet wird. Das Joch 2 besteht aus in üblicher Weise miteinander verbundenen Elektroblechen. Die geblechte Ausführung des Jochs 2 reduziert in das Joch induzierte Wirbelströme und die damit verbundenen Verluste.

Die Erregerwicklungen 1 (1a-1d) sind aus Kupferlitzen hergestellt, um darin ebenfalls die induzierten Wirbelströme und die damit verbundenen Verluste zu reduzieren. Die Kupferlitzen sind als Presslitzen ausgeführt, um einen möglichst hohen Kupferfüllfaktor und damit möglichst geringe ohmsche Verluste im Leiter zu realisieren. Damit ein Magnetfeld mit einer Stärke von ca. 1 Tesla im Entmagnetisierungsvolumen 3 erzeugt wird, werden die ca. 500 kg schweren Erregerwicklungen 1 mit Stromamplituden von 1600 A und Spannungen bis zu 2,3 kV gespeist.

Die gesamten Verluste des Elektromagneten werden mittels einer in die Erregerwicklungen integrierten (nicht gezeigten) Wasser/Glykol-Kühlung abgeführt. Dies ist ausreichend, da das geblechte Joch 2 relativ verlustarm ist und dessen Erwärmung über die Erregerwicklungen mit abgeleitet wird. Die Kühlung der Erregerwicklungen 1a-1d und damit des gesamten Elektromagneten ist vorzugsweise gemäß einer üblichen PKW-Kühlung aufgebaut.

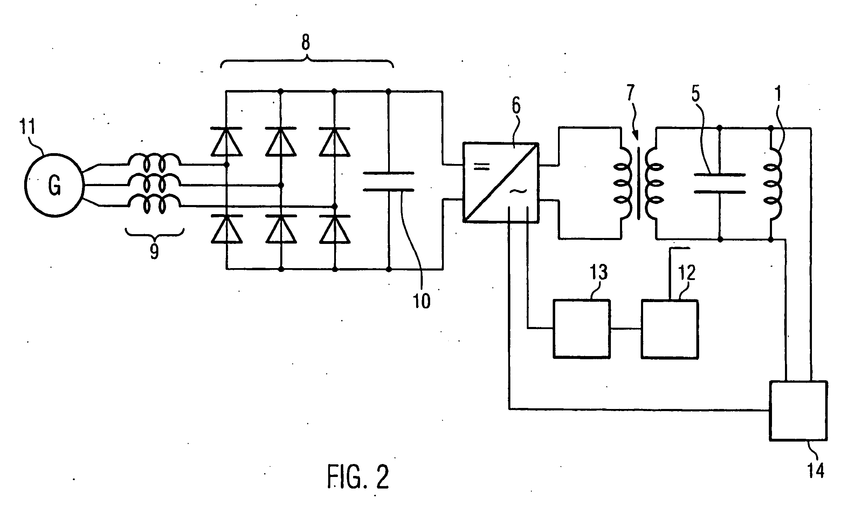

Fig. 2 zeigt ein elektrisches Schaltbild einer bevorzugten Ausführungsform der erfindungsgemäßen Entmagnetisierungsvorrichtung. Ein von einem Generator 11 oder alternativ einem Drehstromnetz erzeugter dreiphasiger Wechselstrom wird über einen Gleichrichter und einen Zwischenkreiskondensator 10 an einen Wechselrichter 6 geführt. Der Gleichrichter weist drei Drosselspulen 9 auf, von denen jeweils eine mit einem Ende an einem Phasenanschluss des Generators 11 und dem anderen Ende an den Verbindungspunkt einer Reihenschaltung von zwei Dioden geschaltet ist. Die auf diese Weise für jede der Phasen vorhandene Reihenschaltung von zwei Dioden ist jeweils an ihrer Anode und Kathode mit den anderen so gebildeten Reihenschaltungen verbunden, wodurch durch diese sechs Dioden eine Diodenbrücke 8 gebildet wird, an deren Ausgängen eine Gleichspannung anliegt. Diese Gleichspannung wird mittels eines parallel zu den Ausgängen der Diodenbrücke 8 geschalteten Zwischenkreiskondensators 10 geglättet und an den Wechselrichter 6 geführt. Die Diodenbrücke 8 bildet zusammen mit den Drosselspulen 9 also einen Vollwellengleichrichter mit vorgeschalteten Entstördrosseln.

Der Wechselrichter 6, auch als DC/AC-Wandler bezeichnet, erzeugt aus dem daran angelegten Gleichspannungssignal ein Wechselspannungssignal, das über einen Transformator 7 einen aus den Erregerspulen 1 (1a-1d) und einem Kondensator 5 (auch stellvertretend für eine Kondensatorbank oder -batterie) bestehenden Schwingkreis speist.

Der Kondensator 5 ist in der bevorzugten Ausführungsform ein wechselspannungsfester Folienkondensator mit 2,5 mF Kapazität, so dass der Schwingkreis etwa mit einer Frequenz von 45 Hz schwingt. Der zum Resonanzkreis parallele Transformator regt in der Anlaufphase den Resonanzkreis an und deckt im Anschluss die Systemverluste. In einem System mit einer Zwischenkreisspannung von 560 V wird durch den Wechselrichter 6 eine Wechselspannung mit Amplituden bis zu 500 V erzeugt. Der Transformator 7 transformiert diese Wechselspannung in ein Signal mit bis zu 2,3 kV, mit dem der Resonanzkreis angeregt wird. Gleichzeitig erfolgt durch den Transformator 7 eine galvanische Trennung des Resonanzkreises von der Spannungsversorgung. Wird diese nicht benötigt, so kann das Hochtransformieren des von dem Wechselrichter 6 ausgegebene Signal auch mittels eines Hochsetzstellers erfolgen.

Die Frequenz und Amplitude des von dem Wechselrichter 6 ausgegebenen Spannungssignals ist variabel, um zum einen eine Abstimmung auf die Resonanzfrequenz des Resonanzkreises zu erhalten und zum anderen eine Beschädigung des dem Wechselrichter 6 nachgeschalteten Transformators 7 und Resonanzkreises, bestehend aus Erregerspulen 1 und Kondensator 5, zu verhindern. Zur Einstellung der Wechselfrequenz auf die Resonanzfrequenz, wodurch eine Verstimmung des Schwingkreises durch Erwärmung oder aufgrund von Alterungseffekten sowie Fertigungstoleranzen Rechnung getragen wird, wird der Schwingkreis zunächst mit einer auf jeden Fall zu hohen Frequenz angeregt, d.h., es erfolgt eine übersynchrone Anregung, wonach die Frequenz abhängig von den Stromamplituden im Schwingkreis solange vermindert wird, bis die Stromamplitude wie gewünscht eingestellt ist. Bei dieser Vorgehensweise erhöht sich der Schwingkreisstrom mit einer Reduktion der Frequenz solange, bis dieser einen Wert erreicht, der für eine bestimmte Magnetfeldstärke (1 Tesla) in der Spule benötigt wird. Sinkt der Strom, so wird aufgrund der kontinuierlichen Überwachung die Frequenz reduziert und damit auf die sinkende Eigenfrequenz reagiert. Die Überwachung erfolgt mittels einer Strommesseinrichtung 12, deren Ausgangssignal an eine Frequenzeinstelleinrichtung 13 geleitet wird, die wiederum auf den Wechselrichter 6 wirkt. Über eine Spannungsmesseinrichtung 14, die die Schwingkreisspannung abgreift, erfolgt eine Begrenzung der von dem Wechselrichter 6 ausgegebenen Erregerspannung derart, dass die diesem nachgeschalteten Bauelementen nicht beschädigt werden.

Die erfindungsgemäße Entmagnetisierungsvorrichtung ist vorzugsweise Teil einer Anlage zur Vernichtung von magnetooptischen und magnetischen Datenträgern, z.B. Festplatten, magnetooptischen Platten, CD's, Videobänder, Datenbänder und ähnliches. Sie dient vorzugsweise dazu, die nachfolgend oder in einer Vorbehandlung zerkleinerten Datenträger im Durchlaufverfahren einem hohen magnetischen Wechselfeld zu unterziehen und dadurch eine vollständige Entmagnetisierung des Materials und damit Löschung der Daten zu erreichen. Bei einer Verweildauer von 3-4 Sekunden im Zwischenraum des Jochs und einer Resonanzfrequenz von 45 Hz erfolgt in etwa ein 150maliges Überschreiben der noch nicht oder schon geschredderten Datenträger. Das so entmagnetisierte Material wird am Schluss in Abfallbehältern gesammelt und kann regulär entsorgt werden.

Das zerkleinerte Material wird vorzugsweise über ein (nicht gezeigtes) Förderband 4 kontinuierlich durch die Entmagnetisierungsvorrichtung geführt, wobei die Entmagnetisierung auf dem Förderband 4 im Zwischenraum als Entmagnetisierungskanal erfolgt. Da zur Erzeugung des nötigen magnetischen Wechselfelds eine sehr hohe elektrische Leistung umgesetzt wird, der Leistungsverbräuch aber gering sein soll und diese Leistung darüber hinaus vorzugsweise in einer mobilen Einrichtung erzeugt wird, z.B. einem Lastwagen mit festem Aufbau, werden die Erregerspulen 1 (1a-1d) mit einem Kondensator 5 (einer Kondensatorbatterie) zu einem Schwingkreis verschaltet, der über einen Transformator von einem Wechselrichter 6 angeregt wird, worüber auch die Systemverluste im Betrieb gedeckt werden. Ein solcher Resonanzkreis ermöglicht es bei relativ geringer Leistungszufuhr hohe Spitzenströme zu erzeugen.

Der magnetische Fluss, der innerhalb von jeweils zwei gegeneinander geschalteten Spulen in jeweils einer Öse des 8-förmigen Jochs entsteht, wird durch das geblechte Joch 2 gebunden und auf den als Entmägnetisierungskanal dienenden Zwischenraum 3 konzentriert. Die Gestaltung des Jochs 2 ermöglicht im Zwischenraum 3 eine magnetischen Flussdichte von 1 Tesla oder mehr, womit eine sichere Entmagnetisierung des zugeführten Materials erreicht wird, da diese deutlich über der üblicherweise zum Löschen von magnetischen Datenträgern verwendeten magnetischen Feldstärke von etwa 0,7 Tesla liegt.

### Bezugszeichenliste

- 1, 1a-1d: Erregerspulen
- 2: Joch
- 3: Zwischenraum
- 4: Transporteinrichtung
- 5: Kondensator
- 6: Wechselrichter
- 7: Transformator
- 8: Diodenbrücke
- 9: Drosselspulen
- 10: Zwischenkreiskondensator
- 11: Generator
- 12: Strommesseinrichtung
- 13: Frequenzeinstelleinrichtung
- 14: Spannungsmesseinrichtung

## Patentansprüche

1. Entmagnetisierungsvorrichtung für magnetische Datenträger, mit einem mit Wechselstrom betriebenen, mit wenigstens einer Erregerwicklung (1a-1d) versehenen Elektromagneten, durch dessen beiderseits der/des zu entmagnetisierenden Datenträger(s) angeordnetes Joch (2) der/die Datenträger mittels einer Transporteinrichtung bewegt werden,
wobei die wenigstens eine Erregerwicklung (1a-1d) des Elektromagneten mit wenigstens einem Kondensator (5) zu einem Resonanzkreis verschaltet ist,
**dadurch gekennzeichnet, dass** der Resonanzkreis (5) über einen Wechselrichter (6) gespeist wird und eine Ausgangsspannung des Wechselrichters (6) auf die Resonanzfrequenz des Resonanzkreises synchronisiert ist,
wobei eine Strommesseinrichtung (12) vorgesehen ist, die Amplituden des im Resonanzkreis fließenden Stroms misst, und
eine Frequenzeinstelleinrichtung (13) vorgesehen ist, die eine Frequenz einer vom Wechselrichter (6) erzeugten Speisespannung ausgehend von einer oberhalb der Resonanzfrequenz liegenden Frequenz solange vermindert, bis die von der Strommesseinrichtung (12) gemessene Stromamplitude auf einen vorbestimmten Wert eingestellt ist.

2. Entmagnetisierungsvorrichtung nach Anspruch 1, **gekennzeichnet durch** einen Transformator (7), der zwischen den Wechselrichter (6) und den Resonanzkreis geschaltet ist.

3. Entmagnetisierungsvorrichtung nach einem der vorstehenden Patentansprüche, **gekennzeichnet durch** eine Spannungsüberwachungseinrichtung (14), die Amplituden der im Resonanzkreis erzeugten Spannung misst und Amplituden der vom Wechselrichter (6) erzeugten Speisespannung so begrenzt, dass eine Zerstörung der **durch** diese Speisespannung versorgten Bauelemente (7, 5, 1) verhindert wird.

4. Entmagnetisierungsvorrichtung nach einem der vorstehenden Patentansprüche, **gekennzeichnet durch** einen Gleichrichter (8, 9) zur Versorgung des Wechselrichters mit Gleichstrom.

5. Entmagnetisierungsvorrichtung nach Patentanspruch 4, **dadurch gekennzeichnet, dass** der Gleichrichter aus einer Diodenbrücke (8) mit vorgeschalteten Drosselspulen (9) besteht.

6. Entmagnetisierungsvorrichtung nach einem der vorstehenden Patentansprüche, **dadurch gekennzeichnet, dass** das Joch (2) 8-förmig ist, wobei der/die Datenträger durch einen Zwischenraum (3) geführt werden, der durch einen geöffneten Mittelsteg des 8-förmigen Jochs (2) gebildet wird.

7. Entmagnetisierungsvorrichtung nach Patentanspruch 6, **dadurch gekennzeichnet, dass** das Volumen des Zwischenraums (3) 200 mm x 200 mm x 70 mm beträgt.

8. Entmagnetisierungsvorrichtung nach Patentanspruch 6 oder 7, **dadurch gekennzeichnet, dass** der Elektromagnet vier Erregerwicklungen (1a-1d) aufweist, von denen jeweils zwei auf einer Hälfte des 8-förmigen Jochs (2) angeordnet sind.

9. Entmagnetisierungsvorrichtung nach einem der vorstehenden Patentansprüche, **dadurch gekennzeichnet, dass** das Joch (2) aus Elektroblech besteht.

10. Entmagnetisierungsvorrichtung nach einem der vorstehenden Patentansprüche, **dadurch gekennzeichnet, dass** die Erregerwicklungen (1a-1d) aus gepresster, verseilter Kupferlitze bestehen.

11. Entmagnetisierungsvorrichtung nach einem der vorstehenden Patentansprüche, **dadurch gekennzeichnet, dass** die Erregerwicklungen (1a-1d) des Elektromagneten mittels einer Flüssigkeitskühlung gekühlt werden.

12. Entmagnetisierungsvorrichtung nach einem der vorstehenden Patentansprüche, **dadurch gekennzeichnet, dass** die Entmagnetisierungsvorrichtung einen Shredder aufweist.

13. Entmagnetisierungsvorrichtung nach einem der vorstehenden Patentansprüche, **gekennzeichnet durch** ein **durch** das Joch des Elektromagneten führendes Förderband zur Zu- und Abfuhr der/des Datenträger(s).

14. Entmagnetisierungsvorrichtung nach einem der vorstehenden Patentansprüche, **gekennzeichnet durch** eine **durch** das Joch (2) des Elektromagneten führende Rutsche, wobei die Rutsche und/oder das Joch (2) kippbar gelagert sind.

15. Entmagnetisierungsvorrichtung nach einem der vorstehenden Patentansprüche, **gekennzeichnet durch** eine Schnecke zur Förderung der/des Datenträger(s) **durch** das Joch (2) des Elektromagneten.

16. Entmagnetisierungsvorrichtung nach einem der vorstehenden Patentansprüche, **dadurch gekennzeichnet, dass** sie für einen mobilen Einsatz auf einem LKW geeignet ist.

17. Entmagnetisierungsvorrichtung nach einem der vorstehenden Patentansprüche, **dadurch gekennzeichnet, dass** eine Ansteuer- bzw. Überwachungselektronik (12, 13, 14) für den Wechselrichter, insbesondere die Strommesseinrichtung (12) und/oder die Frequenzeinstelleinrichtung (13) und/oder die Spannungsüberwachungseinrichtung (14) über ein von einer dem Wechselrichter zugeführten Gleichspannung unabhängiges Versorgungsnetz gespeist wird.

## Claims

1. Demagnetising device for magnetic data media having an electromagnet driven by alternating current and provided with at least one excitation winding (1a-1d) through whose yoke (2) arranged on both sides of the data medium (media) to be demagnetised the data medium or media are moved by means of a transport device,
wherein the at least one excitation winding (1a-1d) is connected to at least one capacitor (5) to form a resonance circuit,
**characterised in that**
the resonance circuit (5) is fed via an inverter (6) and an output voltage from the inverter (6) is synchronised with the resonance frequency of the resonance circuit,
wherein a current measurement device (12) is provided which measures the amplitudes of the current flowing in the resonance circuit, and
a frequency setting device (13) is provided which reduces a frequency of a supply voltage generated by the inverter (6) starting from a frequency lying above the resonance frequency until the current amplitude measured by the current measurement device (12) is set to a predetermined value.

2. Demagnetising device according to claim 1, **characterised by** a transformer (7) connected between the inverter (6) and the resonance circuit.

3. Demagnetising device according to any of the preceding claims, **characterised by** a voltage monitoring device (14) which measures the amplitudes of the voltage generated in the resonance circuit and limits amplitudes of the supply voltage generated by the inverter in such a way that destruction of the components (7, 5, 1) supplied by this supply voltage is prevented.

4. Demagnetising device according to any of the preceding claims, **characterised by** a rectifier (8, 9) for supplying the inverter with direct current.

5. Demagnetising device according to claim 4, **characterised in that** the rectifier consists of a diode bridge (8) having choking coils (9) connected upstream thereof.

6. Demagnetising device according to any of the preceding claims, **characterised in that** the yoke (2) is in the shape of a figure eight, wherein the data medium or media are conveyed through a gap (3) formed by an open centre bar of the figure-eight-shaped yoke (2).

7. Demagnetising device according to claim 6, **characterised in that** the volume of the gap (3) amounts to 200 mm x 200 mm x 70 mm.

8. Demagnetising device according to claim 6 or 7, **characterised in that** the electromagnet has four excitation windings (1a-1d), of which two are arranged on each half of the figure-eight-shaped yoke (2).

9. Demagnetising device according to any of the preceding claims, **characterised in that** the yoke (2) is made of electrical sheet.

10. Demagnetising device according to any of the preceding claims, **characterised in that** the excitation windings (1a-1d) are made of pressed stranded copper wire.

11. Demagnetising device according to any of the preceding claims, **characterised in that** the excitation windings (1a-1d) of the electromagnet are cooled by means of liquid cooling.

12. Demagnetising device according to any of the preceding claims, **characterised in that** the demagnetising device has a shredder.

13. Demagnetising device according to any of the preceding claims, **characterised by** a conveyor belt passing through the yoke of the electromagnet for feeding and removing the data medium or media.

14. Demagnetising device according to any of the preceding claims, **characterised by** a chute leading through the yoke (2) of the electromagnet, wherein the chute and/or the yoke (2) are mounted to be tiltable.

15. Demagnetising device according to any of the preceding claims, **characterised by** a screw for conveying the data media/medium through the yoke (2) of the electromagnet.

16. Demagnetising device according to any of the preceding claims, **characterised in that** it is suitable for mobile use on a lorry.

17. Demagnetising device according to any of the preceding claims, **characterised in that** a control or monitoring electronic system (12, 13, 14) for the inverter, in particular the current measurement device (12) and/or the frequency setting device (13) and/or the voltage monitoring device (14) is supplied via a supply network independent of a dc voltage supplied to the inverter.

## Revendications

1. Dispositif de démagnétisation pour des supports de données magnétiques, avec un électroaimant fonctionnant avec un courant alternatif, muni d'au moins un enroulement excitateur (1a-1d), ayant une culasse (2), disposée de part et d'autre des/du support(s) de données à démagnétiser, à travers laquelle le/les supports de données est/sont déplacé/s au moyen d'un dispositif de transport,
où le au moins un enroulement excitateur (1a-1d) de l'électroaimant est branché avec au moins un condensateur (5), en formant un circuit résonant,
**caractérisé en ce que**
le circuit résonant (5) est alimenté, par l'intermédiaire d'un onduleur (6), et une tension de sortie de l'onduleur (6) est synchronisé à la fréquence de résonance du circuit résonant, où
un dispositif de mesure de courant (12) est prévu, lequel mesure les amplitudes du courant passant dans le circuit résonant, et
un dispositif de réglage de fréquence (13) est prévu, lequel diminue une fréquence d'une tension d'alimentation produite par l'onduleur (6), en partant d'une fréquence située au-dessus de la fréquence de résonance, jusqu'à ce que l'amplitude de courant, mesurée par le dispositif de mesure de courant (12), soit réglé à une valeur prédéterminée.

2. Dispositif de démagnétisation selon la revendication 1, **caractérisé par** un transformateur (7), branché entre l'onduleur (6) et le circuit résonant.

3. Dispositif de démagnétisation selon l'une des revendications précédentes, **caractérisé par** un dispositif de surveillance de tension (14), mesurant les amplitudes de la tension produite dans le circuit résonant, et limitant des amplitudes de la tension d'alimentation produite par l'onduleur (6), de manière qu'une destruction des composants (7, 5, 1) alimentés par cette tension d'alimentation soit empêchée.

4. Dispositif de démagnétisation selon l'une des revendications précédentes, **caractérisé par** un redresseur (8, 9), prévu pour l'alimentation de l'onduleur en courant continu.

5. Dispositif de démagnétisation selon la revendication 4, **caractérisé en ce que** le redresseur est composé d'un pont à diodes (8) avec des bobines de réactance (9) branchées en amont.

6. Dispositif de démagnétisation selon l'une des revendications précédentes, **caractérisé en ce que** la culasse (2) est en forme de 8, le/les supports de données étant guidés à travers un espace intermédiaire (3), formé par une nervure centrale ouverte de la culasse (2) en forme de 8.

7. Dispositif de démagnétisation selon la revendication 6, **caractérisé en ce que** le volume de l'espace intermédiaire (3) est de 200 mm x 200 mm x 70 mm.

8. Dispositif de démagnétisation selon la revendication 6 ou 7, **caractérisé en ce que** l'électroaimant présente quatre enroulements excitateurs (1a-1d), dont chaque fois deux sont disposés sur une moitié de la culasse (2) en forme de 8.

9. Dispositif de démagnétisation selon l'une des revendications précédentes, **caractérisé en ce que** la culasse (2) est composée d'une tôle magnétique.

10. Dispositif de démagnétisation selon l'une des revendications précédentes, **caractérisé en ce que** les enroulement excitateurs (1a-1d) sont composés de torons en cuivre câblés, pressés.

11. Dispositif de démagnétisation selon l'une des revendications précédentes, **caractérisé en ce que** les enroulement excitateurs (1a-1d) de l'électroaimant sont refroidis par un refroidissement par liquide.

12. Dispositif de démagnétisation selon l'une des revendications précédentes, **caractérisé en ce que** le dispositif de démagnétisation présente un déchiqueteur.

13. Dispositif de démagnétisation selon l'une des revendications précédentes, **caractérisé par** une bande transporteuse, passant à travers la culasse de l'électroaimant, pour l'amenée et l'évacuation du/des support(s) de données.

14. Dispositif de démagnétisation selon l'une des revendications précédentes, **caractérisé par** une goulotte, passant à travers la culasse (2) de l'électroaimant, la goulotte et/ou la culasse (2) étant monté(s) de manière à pouvoir basculer.

15. Dispositif de démagnétisation selon l'une des revendications précédentes, **caractérisé par** une vis, pour le transport du/des support(s) de données à travers la culasse (2) de l'électroaimant.

16. Dispositif de démagnétisation selon l'une des revendications précédentes, **caractérisé en ce qu'**il convient pour une utilisation mobile sur un camion.

17. Dispositif de démagnétisation selon l'une des revendications précédentes, **caractérisé en ce qu'**une électronique de commande et/ou de surveillance (12, 13, 14) pour l'onduleur, en particulier le dispositif de mesure de courant (12) et/ou le dispositif de réglage de fréquence (13) et/ou le dispositif de surveillance de tension (14), est alimentée par l'intermédiaire d'un réseau d'alimentation indépendant d'une tension continue amenée à l'onduleur.
